# EUROPÄISCHE PATENTANMELDUNG

(11) **EP 3 885 959 A1**
(43) Veröffentlichungstag der Anmeldung: **29.09.2021**
(21) Anmeldenummer: 20165924.0
(22) Anmeldetag: 26.03.2020
(51) Int. Cl.: G06F 21/76, H04L 9/06

(54) **KONFIGURATIONSDATEI FÜR EIN FIELD PROGRAMMABLE GATE ARRAY MIT EINEM ERSTEN SICHERHEITSPROFIL UND EINEM ZWEITEN SICHERHEITSPROFIL**

(71) Anmelder: Siemens Aktiengesellschaft, 80333 München (DE)
(72) Erfinder: De Santis, Fabrizio, 80634 München (DE); Sel, Tolga, 81379 München (DE)

(57) **Zusammenfassung**

Die Erfindung gibt eine Konfigurationsdatei (1) für ein Field Programmable Gate Array (6) an. Die Konfigurationsdatei (1) weist mindestens einen Konfigurationswert (2), mindestens einen Zusatzwert (3), mindestens eine Adressinformation (4) und mindestens ein Padding-Bit (5) auf. Der Konfigurationswert (2) beinhaltet eine Belegungsinformation des Field Programmable Gate Arrays (6) und eine erste Konfigurationsinformation. Der Zusatzwert (3) beinhaltet eine zweite Konfigurationsinformation. Die Adressinformation (4) lokalisiert den Konfigurationswert (2). Das Padding-Bit (5) unterstützt ein Betreiben des Field Programmable Gate Arrays (6). Dem Konfigurationswert (2), dem Zusatzwert (3), der Adressinformation (4) und dem Padding-Bit (5) ist ein erstes Sicherheitsprofil (9) oder ein zweites Sicherheitsprofil (10) zugeordnet, wobei mindestens einem der Elemente das zweite Sicherheitsprofil (10) zugeordnet ist. Elemente, denen das erste Sicherheitsprofil (9) zugeordnet ist, sind verschlüsselt und Elemente, denen das zweite Sicherheitsprofil (10) zugeordnet ist, sind unverschlüsselt.

Außerdem gibt die Erfindung Field Programmable Gate Array (6) und ein zugehöriges Verfahren für eine Erstellung einer Konfigurationsdatei (1) für ein Field Programmable Gate Array (6) an.

## Beschreibung

### HINTERGRUND DER ERFINDUNG

### Gebiet der Erfindung

Die vorliegende Erfindung betrifft eine Konfigurationsdatei für ein Field Programmable Gate Array, ein Field Programmable Gate Array und ein zugehöriges Verfahren für eine Erstellung einer Konfigurationsdatei für ein Field Programmable Gate Array.

### Beschreibung des Stands der Technik

Ein Field Programmable Gate Array (FPGA) ist ein integrierter Schaltkreis (IC) der Digitaltechnik. Anders als bei der Programmierung von Computern, Microcontrollern oder Steuerungen bezieht sich hier der Begriff Programmierung nicht nur auf die Vorgabe zeitlicher Abläufe, sondern vor allem auf die Definition der gewünschten Schaltungsstruktur.

Die gewünschte Schaltungsstruktur wird mittels einer Hardwarebeschreibungssprache formuliert und von einer Erzeugersoftware in eine Konfigurationsdatei, den Hauptbitstream, übersetzt, welche vorgibt, wie die physikalischen Elemente im FPGA-Bereich konfiguriert und verschaltet werden sollen. Man spricht daher auch von der Konfiguration eines FPGA.

Die partielle Rekonfiguration für FPGAs ermöglicht die Modifikation einzelner Logikblöcke eines FPGAs zur Laufzeit. Ähnlich wie bei Bitstreams wird in diesem Fall auch eine Konfigurationsdatei, der partielle Bitstream, erzeugt. Mit partiellen Bitstreams werden bestimmte Regionen auf dem FPGA zur Laufzeit umkonfiguriert, ohne andere Regionen zu löschen oder zu pausieren. Beispielweise auf Xilinx-FPGAs funktioniert die partielle Rekonfiguration über das Internal Configuration Access Port (ICAP) Modul oder das Processor Configuration Access Port (PCAP) Modul im FPGA.

Um die Integrität und Vertraulichkeit von Haupt- und partiellen Bitstreams zu schützen werden typischerweise symmetrische kryptographische Verfahren eingesetzt. Im normalen Fall werden Bitstreams mit einem Computerprogramm erzeugt, verschlüsselt und authentifiziert. Nur beim Laden eines Bitstreams wird das Bitstream auf dem FPGA-Gerät entschlüsselt und verifiziert, d.h. nach Integrität geprüft.

Aus Performancegründen kann es notwendig sein, dass das Bitstream schnell entschlüsselt und verifiziert werden muss, um eine zeitnahe Inbetriebnahme einer neuen FPGA-Funktionalität zu erzielen.

Durch die Optimierung (z.B. Parallelisierung, Pipelining, Ausrollen, usw.) von Krypto-Implementierungen kann das Zeitproblem im Zusammenhang mit der Entschlüsselung minimiert werden. Ein Nachteil ist jedoch, dass diese Implementierungen auch deutlich mehr Platz auf dem FPGA-Chip bzw. der FPGA-Fabrik benötigen. Manchmal ist die Implementierung eines Krypto-Verfahrens schon in die Hardware fest verbaut und kann daher nicht mehr weiter optimiert werden, wenn besondere zeitliche Bedingungen bei der Inbetriebnahme einer FPGA-Konfiguration zu erfüllen sind.

Außerdem sind allgemein Methoden zur Kompression eines Bitstreams bekannt. In diesem Fall wird die Zeit für die Entschlüsselung gegen die Zeit für die Komprimierung eingetauscht.

Die Aufgabe der Erfindung besteht darin, die Latenz einer Bitstream-Entschlüsselung zu verringern und dadurch die Inbetriebnahme eines verschlüsselten Bitstreams zu beschleunigen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Die Erfindung beansprucht eine Konfigurationsdatei für ein Field Programmable Gate Array (FPGA).

Ein Field Programmable Gate Array ist ein integrierter Schaltkreis der Digitaltechnik. Anders als bei der Programmierung von Computern, Microcontrollern oder Steuerungen bezieht sich hier der Begriff Programmierung nicht nur auf die Vorgabe zeitlicher Abläufe, sondern vor allem auf die Definition der gewünschten Schaltungsstruktur. Diese wird mittels einer Hardwarebeschreibungssprache formuliert und von einer Erzeugersoftware in eine Konfigurationsdatei übersetzt. Die Konfigurationsdatei kann auch als Bitstream bezeichnet werden und ein Hauptbitstream oder ein partielles Bitstream sein. Die Konfigurationsdatei gibt vor, wie bestimmte Bereiche des FPGAs konfiguriert werden sollen.

Im Falle eines Hauptbitstream wird die gewünschten Schaltungsstruktur mittels einer Hardwarebeschreibungssprache formuliert und von einer Erzeugersoftware in den Hauptbitstream übersetzt. Der Hauptbitstream gibt vor wie die physikalischen Elemente im FPGA-Bereich konfiguriert und verschaltet werden sollen. Der partielle Bitstream wird für eine Modifikation einzelner Logikblöcke zur Laufzeit eines FPGAs erzeugt. Mit partiellen Bitstreams werden bestimmte Regionen auf dem FPGA zur Laufzeit umkonfiguriert, ohne andere Regionen zu löschen oder zu pausieren.

Die erfindungsgemäße Konfigurationsdatei weist mindestens einen Konfigurationswert (config data), mindestens einen Zusatzwert (config header), mindestens eine Adressinformation (config command) und mindestens ein Padding-Bit (dummy frame, Konfigurationsbits) auf.

Der Konfigurationswert (config data) beinhaltet eine Belegungsinformation des Field Programmable Gate Arrays und eine erste Konfigurationsinformation. Die Belegungsinformation ist von einem HDL-Programmierungstool (Entwicklungsumgebung in der beispielsweise VHDL programmiert wird) generiert.

Der Zusatzwert (config header) beinhaltet eine zweite Konfigurationsinformation, wie den Chipnamen des Ziel-FPGA, das Erstellungsdatum und die Anzahl der verwendeten Padding-Bits.

Die Adressinformation/Paketteil (config command) lokalisiert den Konfigurationswert in der Konfigurationsdatei und enthält Befehlsdaten und gleichzeitig Konfigurationswerte/Konfigurationsdaten. Ein Block an Konfigurationsdaten könnte beispielsweise ein FPGA Modul (z.B. Addierer, Zufallszahlengenerator, etc.) beschreiben. Die Adressinformation dient auch dazu den Konfigurationswert in die richtige Stelle im FPGA zu schreiben (daher in die richtigen Logikgatter zu laden). Daher die Adressinformation könnte auf eine FPGA-Region zeigen, in die ein Block an Konfigurationsdaten geschrieben werden sollen. Sobald ein FPGA-Chip mit Strom versorgt wird, wird der Hauptbitstream/Konfigurationsdatei von extern in einen internen FPGA-Speicher geladen. Gemäß der Config. Command Informationen / Adressinformation wird der Bitstream im Config. Command Teil in das FPGA platziert. Je nach Hersteller und FPGA-Chip sind Bitstreamstrukturen unterschiedlich. Beispielsweise ist bekannt, dass die Information im FAR-Register (im Config. Command Teil) die Adresse definiert in der das Bitstream geschrieben werden soll. Die restlichen Adressen könnten über die FAR-Information abgeleitet werden. Je nach FPGA-Hersteller und FPGA-Chip könnte die Struktur des Bitstreams unterschiedlich sein.

Das Padding-Bit (Konfigurationsbits) unterstützt ein Betreiben des Field Programmable Gate Arrays. Die Konfigurationswerte (config data) umfassen mehrere Arten von Konfigurationsbits. Diese Arten sind: Look-up-Tables (LUT), Slices und Switch Boxes (PIP).

Dem Konfigurationswert, dem Zusatzwert, der Adressinformation und dem Padding-Bit ist ein erstes Sicherheitsprofil oder ein zweites Sicherheitsprofil zugeordnet, wobei mindestens einem der Elemente das zweite Sicherheitsprofil zugeordnet ist. Dabei können im Fall von mehreren Konfigurationswerten den einzelnen Konfigurationswerten unterschiedliche Sicherheitsprofile (das erstes Sicherheitsprofil und das zweites Sicherheitsprofil) zugeordnet sein. Entsprechendes gilt für mehrere Zusatzwerte, mehrere Adressinformationen und/oder mehrere Padding-Bits.

Elemente, denen das erste Sicherheitsprofil zugeordnet ist, sind verschlüsselt und Elemente, denen das zweite Sicherheitsprofil zugeordnet ist, sind unverschlüsselt. Weiterhin können alle Elemente unabhängig von einer Zuordnung des ersten Sicherheitsprofils und des zweiten Sicherheitsprofils signiert und auf Integrität geschützt / authentifiziert sein. Das hat den Vorteil, dass die Elemente gegen Manipulation geschützt sind.

Ein Aspekt der Erfindung besteht darin, anstatt die vollständige Konfigurationsdatei gegen IP- Diebstahl und Manipulation zu sichern, nur die Elemente der Konfigurationsdatei zu verschlüsseln und authentifizieren bzw. auf dem FPGA zu entschlüsseln und nach Integrität zu prüfen/verifizieren, die vertraulich und authentisch bleiben müssen. Dies können z.B. der Konfigurationswert oder die Konfigurationswerte sein, die den tatsächlichen IP-Core (intellectual property core) oder vertrauliche Informationswerte enthalten.

Die Elemente der Konfigurationsdatei, wie z.B. Adressinformationen, Padding-Bits und sonstige Zusatzinformationen können nur auf Integrität gesichert/authentifiziert werden. In anderen Worten: Nur wichtige/sicherheitskritische Teile der Konfigurationsdatei werden verschlüsselt bzw. verschlüsselt und integritätsgeschützt/authentifiziert.

Beispiele für wichtige/sicherheitskritische Teile der Konfigurationsdatei, welche verschlüsselt werden/welchen das erste Sicherheitsprofil zugeordnet wird, sind: Konfigurationswerte (Config. Data), FAR Register, Major Address, FDRI Register, Terminate Command Check code und andere applikationsspezifisch schützenswerte Bitstream-Teile. Da Bitstreams/ Konfigurationsdateien je nach FPGA-Hersteller unterschiedlich sind, könnten wahlweise auch andere Informationen im Bitstream/in der Konfigurationsdatei entweder verschlüsselt und/oder authentisiert und/oder integritätsgeschützt werden.

Das bedeutet für das Laden einer Konfigurationsdatei (zum Beispiel eines Haupt- oder partiellen Bitstreams) auf einem FPGA, dass nur die Elemente entschlüsselt und auf Integrität geprüft/verifiziert werden müssen, welche vertrauliche Informationen beinhalten. Die restlichen Teile werden nicht entschlüsselt, sondern zum Beispiel nur auf Integrität geprüft/verifiziert.

Dies hat den Vorteil, dass die Zeitdauer zur Inbetriebnahme einer Konfigurationsdatei reduziert wird, da der Entschlüsselungssaufwand reduziert wird. Dadurch wird die Latenz zur Inbetriebnahme einer Konfigurationsdatei reduziert, da nur die Informationen entschlüsselt werden, die vertraulich sind, und die restlichen Elemente/Inhalte einer Konfigurationsdatei (nicht vertrauliche Informationen) zum Beispiel nur auf Integrität geprüft, aber nicht entschlüsselt werden müssen. Um die Latenz zu minimieren, kann somit auf die Optimierungen der unterliegenden Krypto-Implementierungen bzw. Verschlüsselungen verzichtet werden.

In einer weiteren Ausführungsform der Erfindung ist mindestens eines der Elemente integritätsgeschützt. Das bedeutet, dass zumindest der Konfigurationswert, der Zusatzwert, die Adressinformation oder das Padding-Bit zusätzlich zur Verschlüsselung integritätsgeschützt ist. Integritätsgeschützt bedeutet, dass das Element der Konfigurationsdatei authentifiziert wird bzw. auf dem FPGA verifiziert / auf Integrität und/oder auf Authentizität geprüft wird. Auch kann es von Vorteil sein, dass alle Elemente integritätsgeschützt sind.

In einer Variante werden zunächst die Elemente der Konfigurationsdatei verifiziert/auf Integrität geprüft und danach entschlüsselt. In dieser Variante bezieht sich die Verifizierung auf die entschlüsselten Elemente der Konfigurationsdatei.

In einer alternativen Variante werden zunächst die Elemente der Konfigurationsdatei entschlüsselt und danach verifiziert/auf Integrität geprüft. In dieser Variante bezieht sich die Verifizierung auf die verschlüsselten Elemente der Konfigurationsdatei.

In einer alternativen Variante werden nur schützenswerte Elemente der Konfigurationsdatei verifiziert/auf Integrität geprüft, ohne verschlüsselt zu sein.

In einer weiteren Ausführungsform der Erfindung ist dem Konfigurationswert das erste Sicherheitsprofil zugeordnet. Das bedeutet, dass die Konfigurationswerte verschlüsselt sind bzw. auf dem FPGA entschlüsselt werden.

Nach einem Aspekt der Erfindung werden, anstatt die vollständige Konfigurationsdatei zu sichern, nur die Elemente der Konfigurationsdatei verschlüsselt und authentifiziert bzw. auf dem FPGA entschlüsselt und nach Integrität geprüft, die vertraulich und authentisch bleiben müssen. Dies sind z.B. die Konfigurationswerte, die den tatsächlichen IP-Core oder vertrauliche Informationswerte enthalten. Ein anderes Beispiel könnten kryptographische Schlüsselmaterialien sein, die im Bitstream verankert sind. Diese Schlüsselmaterialien könnten verschlüsselt, integritätsgeschützt und authentisiert sein. So muss nicht das gesamte Bitstream verschlüsselt werden, sondern nur kryptographische Informationen die von einem FPGA-basierten Secure Element für sicherheitskritische Anwendungen verwendet werden.

Elemente der Konfigurationsdatei, welche unverschlüsselt gespeichert werden können sind Konfigurationswerte die nicht sicherheitskritisch sind (z.B. Videotreiber, Audiotreiber, Lichttreiber als FPGA Modul im Bitstream). Idealerweise sind die unverschlüsselten Elemente integritätsgeschützt.

In einer weiteren Ausführungsform der Erfindung ist dem Zusatzwert, der Adressinformation und dem Padding-Bit das zweite Sicherheitsprofil zugeordnet. Das bedeutet, dass der Zusatzwert, die Adressinformation und das Padding-Bit verschlüsselt sind bzw. auf dem FPGA entschlüsselt werden.

Die Elemente der Konfigurationsdatei, die z.B. Adressinformationen, Padding-Bits und sonstige Zusatzinformationen enthalten, können somit zum Beispiel nur auf Integrität gesichert werden.

In einer weiteren Ausführungsform der Erfindung wird das erste Sicherheitsprofil und/oder das zweite Sicherheitsprofil unveränderbar zugeordnet oder ist von einem Benutzer zuordenbar.

In einer Variante kann unveränderbar spezifiziert werden, welche Elemente der Konfigurationsdatei nur auf Integrität geprüft bzw. welche Elemente auf Integrität geprüft und entschlüsselt (z.B. für Fuses, Angaben im Bitstream, Konfiguration des FPGA-Chips, etc.) werden sollen. So kann durch Fuses beispielsweise definiert werden, ob und wie die Entschlüsselung bzw. Verifikation funktionieren soll. Beispielsweise kann durch das Brennen gewisser Fuses erzwungen werden, dass das FPGA nur mit gesicherten Bitstreams betrieben werden kann. Die Fuses können Konfigurationsparameter aber auch kryptographische Schlüssel beinhalten, um die kryptographisehe Prüfung der Bitstreams durchführen zu können. Fuses könnten angeben, welche Teile des Bitstreams nicht geschützt und welche Teile geschützt sind. Außerdem können beispielsweise Battery-backed RAM (BBRAM) Mechanismen verwendet werden, um ähnliche Eigenschaften wie mit Fuses zu erzeugen. Jedoch können, im Gegensatz zu Fuses, die Informationen im BBRAM wieder rückgängig gemacht / gelöscht werden. Außerdem können Angaben im Bitstream definieren, welche Teile des Bitstreams mit entschlüsselt bzw. validiert werden müssen. Außerdem kann durch interne Konfigurationsmechanmismen des FPGA-Chips definiert werden, wie ein Bitstream aufgebaut werden muss, das heißt, welche Teile verschlüsselt und/oder integritätsgeschützt bzw. authentisch sein müssen.

In einer alternativen Variante kann das Zuordnen des ersten Sicherheitsprofils und/oder des zweiten Sicherheitsprofils flexibel gehalten werden und zum Beispiel durch einen Inputparameter festgelegt werden. Dies kann z.B. durch eine Anwendungsdomäne des Endprodukts (Zeiteigenschaften: "Wie schnell muss die Entschlüsselung und Verifizierung sein?"), eine Toolchain Konfiguration, Security-Policies, etc. bestimmt werden. So kann durch Konfigurationsparameter im Bitstream/Konfigurationsdatei beispielsweise definiert werden in welchem Sicherheitslevel (Security-Level) das FPGA betrieben werden soll. Falls es sich um eine kritische Anwendung handelt, dann kann durch das Setzen gewissen Konfigurationsparameter erzwungen werden, dass nur sichere Bitstreams/Konfigurationsdateien (authentisch und/oder vertraulich) verwendet werden dürfen. Außerdem können Konfigurationsparameter im Bitstream/in der Konfigurationsdatei beispielsweise auch angeben, ob weitere anwendungsspezifische Eigenschaften wie die Geschwindigkeits- und Zeitanforderungen eigehalten werden müssen. So kann, um die Geschwindigkeit zu erhöhen, das Bitstream/die Konfigurationsdatei nur teilweise verschlüsselt bzw. authentisiert werden.

In einer weiteren Ausführungsform der Erfindung sind die Elemente der Konfigurationsdatei zumindest teilweise komprimiert. In einer Variante können bestimmte Elemente der Konfigurationsdatei zunächst komprimiert werden und danach entweder nur auf Integrität verifiziert oder entschlüsselt und verifiziert werden. Eine Kompression hat den Vorteil, dass die Inbetriebnahme des FPGAs zusätzlich zur nicht vollständigen Verschlüsselung (zumindest einem Element der Konfigurationsdatei wird das zweite Sicherheitsprofil zugeordnet) beschleunigt wird.

In einer weiteren Ausführungsform der Erfindung sind Elemente, denen das erste Sicherheitsprofil zugeordnet ist, symmetrisch, asymmetrisch oder mittels Post-quantum Kryptographie verschlüsselt. Des Weiteren sind alle gängigen kryptographischen Verfahren möglich, um die Verschlüsselung des ersten Sicherheitsprofil zu realisieren.

In einer weiteren Ausführungsform der Erfindung ist die Konfigurationsdatei ein Bitstream. Der Bitstream kann ein partieller Bitstream oder ein Hauptbitstream sein.

Die Erfindung umfasst außerdem ein Field Programmable Gate Array (FPGA) aufweisend eine erfindungsgemäße Konfigurationsdatei.

In einer Variante ist der Mechanismus der erfindungsgemäßen Konfigurationsdatei fest in einer FPGA-Hardwareeinheit verbaut. Der Mechanismus könnte eine Authenticated Encryption with Associated Data (AEAD) Komponente sein. Diese Komponente führt die Authentisierung und Entschlüsselung durch. Die Komponente könnte fest in den FPGA-Chip als ASIC implementiert sein.

In einer Variante wird der Mechanismus der erfindungsgemäßen Konfigurationsdatei in eine FPGA-Logikeinheit geladen. Der Mechanismus könnte eine Authenticated Encryption with Associated Data (AEAD) Komponente sein. Diese Komponente führt die Authentisierung und Entschlüsselung durch. Die Komponente könnte in die FPGA-Logikregion als IP-Core geladen werden und, je nach Anwendungsszenario, nach dem gesicherten Bitstream-Update wieder entfernt werden. Falls ein erneutes erfindungsgemäßes Bitstream-Update bevorsteht, kann das AEAD-Modul wieder in die FPGA-Logikregion geladen werden.

Die Entschlüsselungs- und Authentifizierungskomponente für die erfindungsgemäße Teilverschlüsselung kann somit sowohl fest in die Hardware verbaut werden als auch als FPGA-Schaltung programmiert werden und hat somit den Vorteil, dass sie flexibel einsetzbar ist.

Alternativ und/oder zusätzlich zeigt eine Sicherheitsinformation, welche Regionen/Elemente der Konfigurationsdatei / des Bitstreams nicht gesichert sind. Die restlichen Regionen / Elemente sind dann automatisch abgesichert. So kann verhindert werden, dass durch das Löschen der Sicherheitsinformation manipulierte Bitstreams / Konfigurationsdateien eingespielt werden können.

Die Erfindung umfasst außerdem ein Verfahren für eine Erstellung einer Konfigurationsdatei für ein Field Programmable Gate Array.

Die Konfigurationsdatei weist mindestens einen Konfigurationswert, mindestens einen Zusatzwert, mindestens eine Adressinformation und mindestens ein Padding-Bit auf.

Der Konfigurationswert beinhaltet eine Belegungsinformation des Field Programmable Gate Arrays und eine erste Konfigurationsinformation. Der Zusatzwert beinhaltet eine zweite Konfigurationsinformation. Die Adressinformation lokalisiert den Konfigurationswert in der Konfigurationsdatei und/oder die richtige Stelle im Field Programmable Gate Array (Adresse der Logikgatterregion). Das Padding-Bit unterstützt ein Betreiben des Field Programmable Gate Arrays und hilft weitere Konfigurationswerte bzw. Belegungsinformationen in das Field Programmable Gate Array zu laden.

Das Verfahren beinhaltet den Schritt eines Zuordnens eines ersten Sicherheitsprofils oder eines zweiten Sicherheitsprofils zu dem Konfigurationswert, dem Zusatzwert, der Adressinformation und dem Padding-Bit, wobei mindestens einem der Elemente das zweite Sicherheitsprofil zugeordnet wird und wobei Elemente, denen das erste Sicherheitsprofil zugeordnet ist, verschlüsselt werden und wobei Elemente, denen das zweite Sicherheitsprofil zugeordnet ist, unverschlüsselt bleiben.

In einer weiteren Ausführungsform umfasst die Erfindung ein Verfahren für eine Erstellung einer erfindungsgemäßen Konfigurationsdatei.

### KURZE BESCHREIBUNG DER ZEICHNUNGEN

Die Besonderheiten und Vorteile der Erfindung werden aus den nachfolgenden Erläuterungen anhand von schematischen Zeichnungen und einem Ausführungsbeispiel ersichtlich.

Es zeigen
- Fig. 1: eine Konfigurationsdatei,
- Fig. 2: ein Field Programmable Gate Array und
- Fig. 3: ein Zuordnen eines erstes Sicherheitsprofils oder eines zweiten Sicherheitsprofils.

### DETAILLIERTE BESCHREIBUNG DER ERFINDUNG

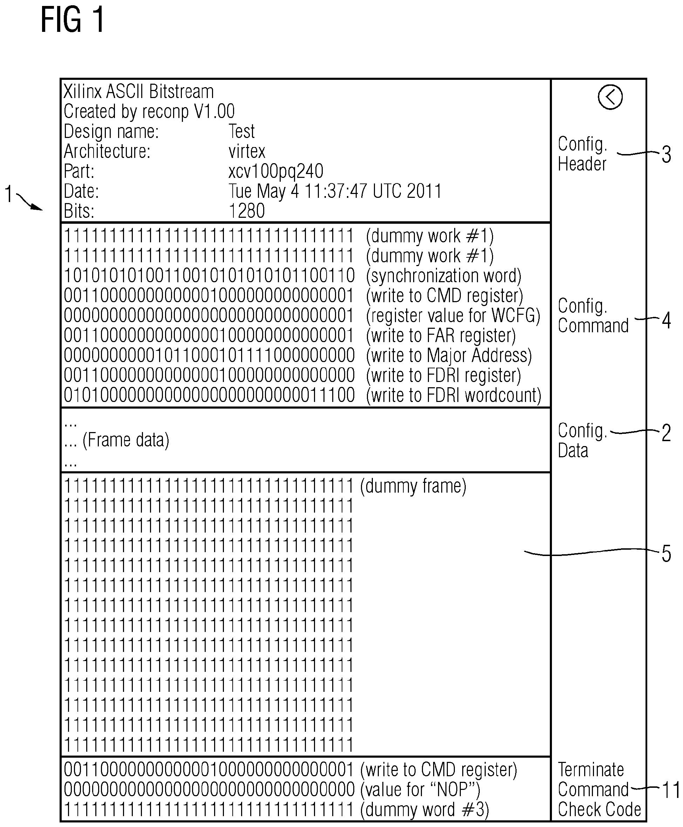

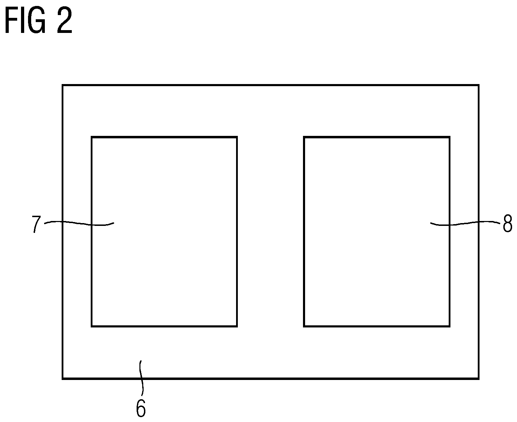

Fig. 1 zeigt eine Konfigurationsdatei 1 für ein Field Programmable Gate Array (FPGA) 6 (dargestellt in Fig. 2). Die Konfigurationsdatei 1 weist verschiedene Elemente (2-5) auf: Konfigurationswerte 2, auch als Config data bezeichenbar, Zusatzwerte 3, auch als Config header bezeichnebar, Adressinformationen 4 (und Konfigurationsinformationen), auch als Config command bezeichenbar, Padding-Bits 5, auch als Dummy frame bezeichenbar und einen Terminate Command Check Code 11 auf. Je nach FPGA-Hersteller und FPGA-Chip können Bitstreamstrukturen unterschiedlich sein und Konfigurationsdateien anders aufgebaut sein.

Der Konfigurationswert 2 (config data) beinhaltet eine Belegungsinformation des Field Programmable Gate Arrays 6 und eine erste Konfigurationsinformation. Die Belegungsinformation ist von einem HDL-Programmierungstool (Entwicklungsumgebung in der beispielsweise VHDL programmiert wird) generiert.

Der Zusatzwert 3 (config header) beinhaltet eine zweite Konfigurationsinformation, wie den Chipnamen des Ziel-FPGA, das Erstellungsdatum und die Anzahl der verwendeten Padding-Bits 5.

Die Adressinformation 4 /Paketteil (config command) lokalisiert den Konfigurationswert 2 in der Konfigurationsdatei 1 und enthält Befehlsdaten und Konfigurationsdaten/Konfigurationswerte 2. Beispielsweise beschreiben die Konfigurationsdaten die FPGA IP-Module (z.B. Addierer, Zufallszahlengenerator, SOFT-CPU, etc.). Die Adressinformation 4 dient, je nach Hersteller, auch/oder dazu den Konfigurationswert 2 in die richtige Stelle im FPGA 6 zu schreiben (daher in die richtigen Logikgatter zu laden). Sobald eine FPGA-Karte mit Strom versorgt wird, wird der Hauptbitstream/Konfigurationsdatei 1 von extern in einen internen FPGA-Speicher geladen. Gemäß der Config. Command Informationen / Adressinformation 4 wird der Bitstream (Konfigurationsdaten), im Config. Command Teil, in das FPGA platziert. Je nach Hersteller und FPGA-Chip sind Bitstreamstrukturen unterschiedlich. Beispielsweise ist bekannt, dass die Information im FAR-Register (im Config. Command Teil) die Adresse definiert in der das Bitstream geschrieben werden soll. Die restlichen Adressen könnten über die FAR-Information abgeleitet werden.

Das Padding-Bit 5 (Konfigurationsbits) unterstützt ein Betreiben des Field Programmable Gate Arrays 6 und die richtige Konfiguration des Bitstreams an die richtige FPGA-Adresse (abhängig von der Adressinformation 4). Die Konfigurationswerte 2 (config data) / Konfigurationsdaten beschreiben verschiedene FPGA IP-Module (z.B. Addierer, Zufallszahlengenerator, SOFT-CPU, etc.). Die Padding-Bits 5 beschreiben den Offset beginnend bei der Adressinformation 4 an die die Konfigurationswerte 2 geschrieben werden sollen. Konfigurationsdaten können 2 können diese Arten von FPGA-Logikregionen beschreiben: Look-up-Tables (LUT), Slices und Switch Boxes (PIP).

Fig. 2 zeigt ein Field Programmable Gate Array 6. Das Field Programmable Gate Array 6 weist eine Hardwareeinheit 7 und eine Logikeinheit 8 auf. Das Field Programmable Gate Array 6 kann auch als FPGA-SoC ausgebildet sein.

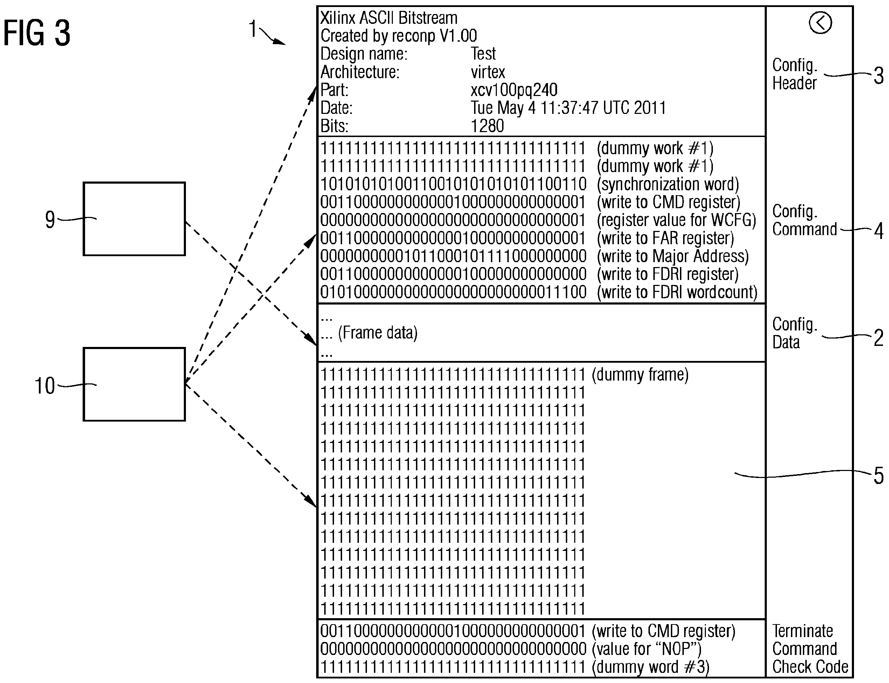

Fig. 3 zeigt ein Zuordnen eines erstes Sicherheitsprofils 9 oder eines zweiten Sicherheitsprofils 10. Dabei kann dem Konfigurationswert 2, dem Zusatzwert 3, der Adressinformation 4 und dem Padding-Bit 5 ein erstes Sicherheitsprofil 9 oder ein zweites Sicherheitsprofil 10 zugeordnet werden. Im Beispiel wird den Konfigurationswerten 2 das erstes Sicherheitsprofil 9 zugeordnet und den Zusatzwerten 3, den Adressinformationen 4 und den Padding-Bits 5 das zweites Sicherheitsprofil 10 zugeordnet.

Elemente 2-5, denen das erste Sicherheitsprofil 9 zugeordnet ist, sind verschlüsselt und Elemente 2-5, denen das zweite Sicherheitsprofil 10 zugeordnet ist, sind unverschlüsselt. Sinnvollerweise sind alle Elemente beziehungsweise einzelne Elemente integritäts- und/oder authentizitätsgeschützt.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- 1: Konfigurationsdatei
- 2: Konfigurationswert
- 3: Zusatzwert
- 4: Adressinformation
- 5: Padding-Bit
- 6: Field Programmable Gate Array
- 7: Hardwareeinheit
- 8: Logikeinheit
- 9: erstes Sicherheitsprofil
- 10: zweites Sicherheitsprofil
- 11: Terminate Command Check Code

## Patentansprüche

1. Konfigurationsdatei (1) für ein Field Programmable Gate Array (6),
aufweisend die Elemente:
- ein Konfigurationswert (2), wobei der Konfigurationswert (2) eine Belegungsinformation des Field Programmable Gate Arrays (6) und eine erste Konfigurationsinformation beinhaltet,
- ein Zusatzwert (3), wobei der Zusatzwert (3) eine zweite Konfigurationsinformation beinhaltet,
- eine Adressinformation (4), wobei die Adressinformation (4) den Konfigurationswert (2) lokalisiert und
- ein Padding-Bit (5), wobei das Padding-Bit (5) ein Betreiben des Field Programmable Gate Arrays (6) unterstützt,
wobei dem Konfigurationswert (2), dem Zusatzwert (3), der Adressinformation (4) und dem Padding-Bit (5) ein erstes Sicherheitsprofil (9) oder ein zweites Sicherheitsprofil (10) zugeordnet ist und wobei mindestens einem der Elemente das zweite Sicherheitsprofil (10) zugeordnet ist,
wobei Elemente, denen das erste Sicherheitsprofil (9) zugeordnet ist, verschlüsselt sind und wobei Elemente, denen das zweite Sicherheitsprofil (10) zugeordnet ist, unverschlüsselt sind.

2. Konfigurationsdatei (1) nach Anspruch 1,
**dadurch gekennzeichnet,**
**dass** mindestens eines der Elemente integritätsgeschützt ist.

3. Konfigurationsdatei (1) nach einem der vorherigen Ansprüche,
**dadurch gekennzeichnet,**
**dass** dem Konfigurationswert (2) das erste Sicherheitsprofil (9) zugeordnet ist.

4. Konfigurationsdatei (1) nach einem der vorherigen Ansprüche,
**dadurch gekennzeichnet,**
**dass** dem Zusatzwert (3), der Adressinformation (4) und dem Padding-Bit (5) das zweite Sicherheitsprofil (10) zugeordnet ist.

5. Konfigurationsdatei (1) nach einem der vorherigen Ansprüche,
**dadurch gekennzeichnet,**
**dass** das erste Sicherheitsprofil (9) und/oder das zweite Sicherheitsprofil (10) unveränderbar zugeordnet wird oder von einem Benutzer zuordenbar ist.

6. Konfigurationsdatei (1) nach einem der vorherigen Ansprüche,
**dadurch gekennzeichnet,**
**dass** die Elemente der Konfigurationsdatei (1) zumindest teilweise komprimiert sind.

7. Konfigurationsdatei (1) nach einem der vorherigen Ansprüche,
**dadurch gekennzeichnet,**
**dass** Elemente, denen das erste Sicherheitsprofil (9) zugeordnet ist, symmetrisch oder asymmetrisch verschlüsselt sind.

8. Konfigurationsdatei (1) nach einem der vorherigen Ansprüche,
**dadurch gekennzeichnet,**
**dass** die Konfigurationsdatei (1) ein Bitstream ist.

9. Konfigurationsdatei (1) nach einem der vorherigen Ansprüche,
**dadurch gekennzeichnet,**
**dass** die Konfigurationsdatei (1) ein partieller Bitstream oder ein Hauptbitstream ist.

10. Field Programmable Gate Array (6) aufweisend eine Konfigurationsdatei (1) nach einem der vorherigen Ansprüche.

11. Field Programmable Gate Array (6) nach Anspruch 10,
**dadurch gekennzeichnet,**
**dass** die Konfigurationsdatei (1) in eine Hardwareeinheit (7) des Field Programmable Gate Arrays (6) verbaut ist oder in eine Logikeinheit (8) des Field Programmable Gate Arrays (6) geladen wird.

12. Verfahren für eine Erstellung einer Konfigurationsdatei (1) für ein Field Programmable Gate Array (6),
aufweisend die Elemente:
- ein Konfigurationswert (2), wobei der Konfigurationswert (2) eine Belegungsinformation des Field Programmable Gate (6) Arrays und eine erste Konfigurationsinformation beinhaltet,
- ein Zusatzwert (3), wobei der Zusatzwert (3) eine zweite Konfigurationsinformation beinhaltet,
- eine Adressinformation (4), wobei die Adressinformation (4) den Konfigurationswert (2) lokalisiert und
- ein Padding-Bit (5), wobei das Padding-Bit (5) ein Betreiben des Field Programmable Gate Arrays (6) unterstützt, mit dem Schritt:
- Zuordnen eines ersten Sicherheitsprofils (9) oder eines zweiten Sicherheitsprofils (10) zu dem Konfigurationswert (2), dem Zusatzwert (3), der Adressinformation (4) und dem Padding-Bit (5), wobei mindestens einem der Elemente das zweite Sicherheitsprofil (10) zugeordnet wird,
wobei Elemente, denen das erste Sicherheitsprofil (9) zugeordnet ist, verschlüsselt werden und wobei Elemente, denen das zweite Sicherheitsprofil (10) zugeordnet ist, unverschlüsselt bleiben.

13. Verfahren nach Anspruch 12,
**gekennzeichnet durch** eine Konfigurationsdatei (1) nach einem der Ansprüche 1 bis 9.
